# EUROPÄISCHE PATENTSCHRIFT

(11) **EP 0 771 975 B1**
(45) Veröffentlichungstag und Bekanntmachung des Hinweises auf die Patenterteilung: **20.10.1999**
(21) Anmeldenummer: 96113372.5
(22) Anmeldetag: 21.08.1996
(51) Int. Cl.: F16H 63/14, F16H 63/18, F16H 61/18

(54) **Schaltvorrichtung für ein Schaltgetriebe**
Speed change device for gearbox
Changement de vitesse pour boîte de vitesses

(30) Priorität: 31.10.1995 DE 19540522
(43) Veröffentlichungstag der Anmeldung: 07.05.1997
(73) Patentinhaber: Dr.Ing.h.c. F. Porsche Aktiengesellschaft, 70435 Stuttgart (DE)
(72) Erfinder: Fuchs, Robert, 75446 Wiernsheim (DE); Sander, Edmund, 71229 Leonberg (DE)

(56) Entgegenhaltungen:
- EP-A- 0 448 526
- DE-A- 4 228 797
- DE-B- 1 184 665
- DE-C- 4 427 076
- GB-A- 2 129 074

## Beschreibung

Die Erfindung geht aus von einer Schaltvorrichtung für ein Schaltgetriebe nach der Gattung des Hauptanspruches.

Eine derartige Schaltvorrichtung ist beispielsweise in der DE 42 28 797 A1 beschrieben und weist einen Schaltrotor auf, durch dessen Verdrehen sechs Vorwärtsgänge und ein Rückwärtsgang schaltbar sind. Der Schaltrotor ist mit Führungsbahnen versehen, in die Zwischenelemente eingreifen, die mit an sich bekannten Schaltgabeln zusammenwirken. Durch die längsgeführten Zwischenelemente wird die Drehbewegung des Schaltrotors in eine Längsbewegung der Schaltgabeln umgesetzt. Die Drehbewegung des Schaltrotors wird durch ein Schrittschaltwerk ausgelöst, das mit dem Schalthebel des Kraftfahrzeuges verbunden ist. Der Schalthebel wird zum Schalten der Vorwärtsgänge und des Rückwärtsganges in einer einzigen Schaltgasse bewegt. Durch Bewegen des Schalthebels aus einer mittleren Neutralstellung in eine Schaltrichtung wird ein Heraufschalten, durch Bewegen des Schalthebels aus der Neutralstellung in die entgegengesetzte Richtung wird ein Herunterschalten ausgelöst Um ein unbeabsichtigtes Schalten vom ersten Gang in den Rückwärtsgang zu verhindern, ist eine am Schalthebel angeordnete Verriegelungseinrichtung vorgesehen, die über einen Seilzug auf eine Sperrklinke am Schaltrotor einwirkt. Darüber hinaus kann das Schaltgetriebe aus jeder Schaltstellung durch Querbewegen des Schalthebels in eine neutrale Schaltstellung gebracht werden. Dabei ist eine Schaltgabel, die bei der Schaltung aller Getriebegänge einschließlich des Rückwärtsganges mitwirkt, mit einem schwenkbaren Koppelelement versehen, das aus der Führung des Zwischenelementes herausgeschwenkt und durch eine zusätzliche Führung in eine Neutralstellung verbracht werden kann. Dieses Herausschwenken erfolgt mit Hilfe eines Servomotors, der bei jedem Schaltvorgang und beim Querbewegen des Schalthebels mitwirkt.

Der Erfindung liegt demgegenüber die Aufgabe zugrunde, eine Schaltvorrichtung nach der Gattung des Hauptanspruches dahingehend zu verbessern, daß die Sicherheit gegen unbeabsichtigtes Einlegen des Rückwärtsganges erhöht wird und gleichzeitig die gesamte Schaltvorrichtung auch ohne Servomotoren betätigt werden kann.

Diese Aufgabe wird erfindungsgemäß mit den kennzeichnenden Merkmalen des Hauptanspruches gelöst.

Eine sehr hohe Sicherheit gegen Fehlschaltungen und unbeabsichtigtes Schalten des Rückwärtsganges wird dadurch erzielt, daß die Vorwärtsgänge des Schaltgetriebes durch Bewegen des Schalthebels in einer ersten Schaltgasse geschaltet werden. Der Rückwärtsgang wird unabhängig von dieser ersten Schaltgasse in einer zweiten Schaltgasse geschaltet, so daß für den Fahrer eine augenscheinliche Trennung der Schaltfunktionen gegeben ist. Der Schalthebel wird zum Einlegen des Rückwärtsganges bzw. zum Vorwählen der Rückwärtsganggasse senkrecht zur ersten Schaltgasse bewegt. Dazu ist der Schalthebel über zweite Übertragungsmittel mit einer Vorwählwelle gekoppelt, mit der Koppelelemente zwischen der Schaltgabel und dem Schaltrotor verstellbar sind. Die Verstellung der Koppelelemente erfolgt damit unabhängig von der Stellung bzw. Betätigung des Schaltrotors. Damit wird eine Schaltvorrichtung geschaffen, bei der eine sichere Trennung bei der Betätigung der Vorwärtsgänge und des Rückwärtsganges gegeben ist und für den Fahrer bei der Betätigung des Schalthebels ohne weiteres nachvollziehbar ist. Die Schaltvorrichtung kann dabei ohne Unterstützung durch Servomotoren betätigt werden, wodurch erhebliche Bauteileinsparungen möglich sind und insbesondere auf eine aufwendige Steuerelektronik verzichtet werden kann.

Eine derartige Schaltvorrichtung kann besonders platzsparend aufgebaut werden, wenn die Koppelelemente auf der als Vorwählwelle ausgeführten Vorwähleinrichtung längsgeführt sind und durch die zweiten Übertragungsmittel etwa senkrecht dazu verstellbar sind. Dabei können die Koppelelemente auf dieser Vorwählwelle in Schaltrichtung geführt werden, wobei diese Bewegung durch die Drehung des Schaltrotors verursacht wird. Die zweiten, mit der Vorwählwelle gekoppelten Übertragungsmittel können dann in vorteilhafter Weise die Koppelelemente durch Verdrehen der Vorwählwelle etwa senkrecht zur Schaltrichtung verschwenken.

Ein besonders vorteilhafter Aufbau der Schaltvorrichtung ergibt sich, wenn die Koppelelemente beim Verschwenken durch das zweite Übertragungsmittel mit einer Verstelleinheit zusammenwirken, durch die ein zwangsgeführtes Verschieben der Koppelelemente in Schaltrichtung möglich ist. Damit läßt sich bereits beim Verschwenken der Koppelelemente ein Schaltvorgang ausführen, der entweder das jeweilige Schaltelement in eine Neutralstellung oder eine Rückwärtsgangstellung überführt.

Es ist weiterhin möglich, das Koppelelement so auszuführen, daß es durch zwei beabstandete Führungsglieder in den jeweiligen Endstellungen der Schwenkbewegung mit dem Schaltrotor gekoppelt ist. Dabei kann durch das erste Führungsglied in der ersten Endstellung der Schwenkbewegung eine Schaltbewegung für die Vorwärtsgänge ausgeführt werden, während durch das zweite Führungsglied in der zweiten Schaltgasse die Schaltbewegung für den Rückwärtsgang ausgeführt wird.

Der Schaltvorgang mit einer derartigen Schaltvorrichtung wird noch einmal erheblich sicherer gestaltet, wenn zusätzlich Verriegelungsmittel vorgesehen werden, durch die ein Schalten des Rückwärtsganges nur aus definierten Schaltstellungen des Schaltgetriebes möglich ist. Dadurch kann sichergestellt werden, daß ein Einlegen des Rückwärtsganges nur möglich ist, wenn zuvor der erste Gang eingelegt war.

Diese Sperreinrichtung kann in vorteilhafter Weise aus zusammenwirkenden Sperrgliedern zwischen der Vorwählwelle und dem Schaltrotor bestehen. Diese können platzsparend innerhalb der Schaltvorrichtung bzw. innerhalb des Getriebes angeordnet werden, wobei eine rein mechanisch wirkende Verriegelung möglich ist. Dabei können die Sperrglieder auf besonders vorteilhafte Weise aus jeweils mindestens einer Rastscheibe an der Vorwählwelle und dem Schaltrotor und einem mit diesen zusammenwirkenden Rastglied bestehen.

Weitere Vorteile und vorteilhafte Weiterbildungen der Erfindung ergeben sich aus den Unteransprüchen und der Beschreibung. Letztere zeigt in
- Fig. 1: den schematischen Aufbau eines beispielhaft dargestellten Schaltgetriebes,
- Fig. 2: eine schematische Zuordnung der Getriebegänge und Synchronisierkupplungen,
- Fig. 3: einen nur teilweise dargestellten, vereinfachten Längsschnitt durch die Schaltvorrichtung,
- Fig. 4: einen ebenfalls nur teilweise dargestellten, vereinfachten Querschnitt durch die Schaltvorrichtung entlang der Linie IV-IV nach Fig. 3,
- Fig. 5: eine schematische Darstellung der Schaltbewegungen am Schalthebel,
- Fig. 6: einen weiteren nur teilweise dargestellten, vereinfachten Querschnitt durch die Schaltvorrichtung entlang der Linie VI-VI nach Fig. 3,
- Fig. 7: eine Ansicht eines Zwischenelementes in Pfeilrichtung VII nach Fig. 3,
- Fig. 8: eine Ansicht der Verstelleinheit in Pfeilrichtung VIII nach Fig. 4,
- Fig. 9a bis 9c: eine vereinfachte Ansicht der einander zugeordneten Rastscheiben und Raststifte,
- Fig. 10: eine vereinfachte Ansicht einer abgewandelten Rastscheibe.

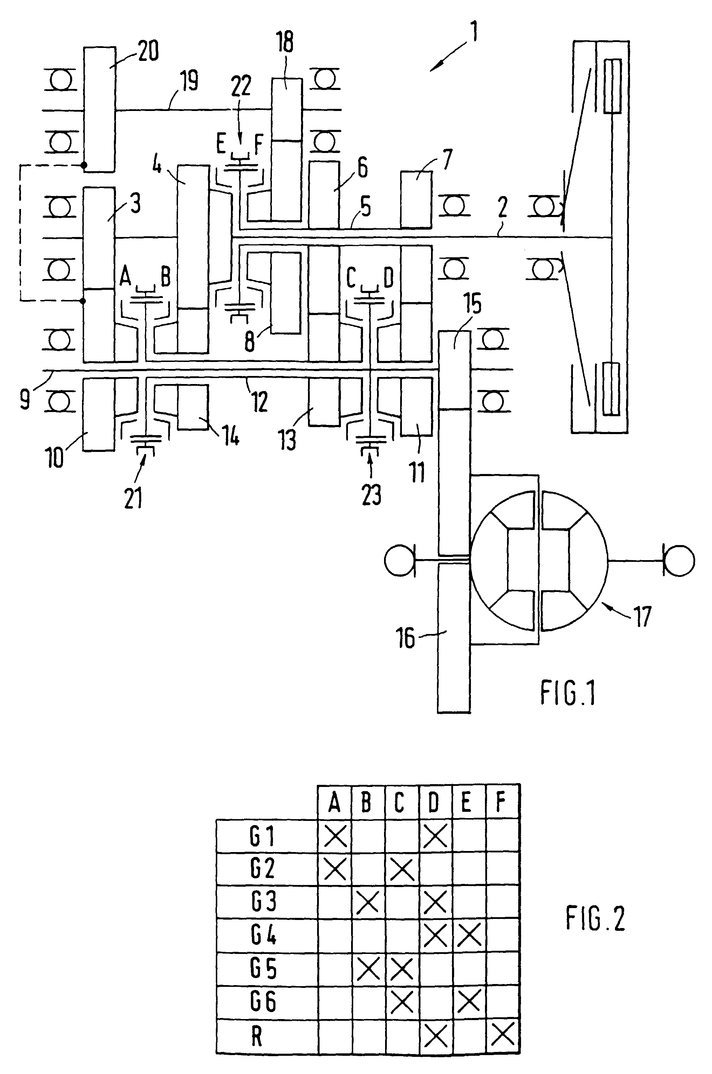

Das in Fig. 1 beispielhaft dargestellte Schaltgetriebe 1 hat eine Eingangswelle 2 mit zwei Zahnrädern 3, 4, die als Festräder ausgebildet sind. Auf der Eingangswelle 2 ist eine Hohlwelle 5 gelagert, die mit zwei als Festräder ausgebildeten Zahnrädern 6, 7 und einem drehbar gelagerten Losrad 8 versehen ist. Parallel zur Eingangswelle 2 ist im nicht näher dargestellten Getriebegehäuse eine Ausgangswelle 9 gelagert, auf der zwei Losräder 10, 11 und eine Hohlwelle 12 gelagert sind. Die Hohlwelle 12 ist mit einem als Festrad ausgebildeten Zahnrad 13 und einem weiteren, als Losrad ausgebildeten Zahnrad 14 versehen. Die Ausgangswelle 9 ist endseitig mit einem Abtriebszahnrad 15 versehen, das mit dem Antriebsrad 16 eines Differentialgetriebes 17 zusammenwirkt. Die Wellen und die darauf direkt oder indirekt angeordneten Zahnräder sind so angeordnet, daß das Zahnrad 3 der Eingangswelle 2 mit dem Losrad 10 der Ausgangswelle 12 im Eingriff steht. Das zweite als Festrad ausgebildete Zahnrad 4 der Eingangswelle steht im Eingriff mit dem Losrad 14 der auf der Ausgangswelle 9 gelagerten Hohlwelle 12. Das auf der Hohlwelle 5 angeordnete Zahnrad 6 steht im Eingriff mit dem Festrad 13 der zweiten Hohlwelle 12 und das Zahnrad 7 der ersten Hohlwelle 5 steht im Eingriff mit dem Losrad 11 der Ausgangswelle 9. Das auf der ersten Hohlwelle 5 gelagerte Losrad 8 steht im Eingriff mit einem Zahnrad 18, das fest mit einer Rückwärtsgangwelle 19 verbunden ist. Mit dieser ist weiterhin ein zweites Zahnrad 20 fest verbunden, das mit dem Losrad 10 der Ausgangswelle 9 im Eingriff steht.

Zum Schalten der einzelnen Getriebegänge G1 bis G6 und R sind drei an sich bekannte doppelt wirkende Synchronisierkupplungen 21 bis 23 vorgesehen, die aus einer neutralen Mittelstellung in zwei Schaltstellungen stellbar sind. Die erste Synchronisierkupplung 21 ist mit der zweiten Hohlwelle 12 verbunden und wirkt in ihrer ersten Schaltstellung A mit dem Losrad 10 und in ihrer zweiten Schaltstellung B mit dem Losrad 14 auf an sich bekannte Weise zusammen. Die zweite Synchronisierkupplung 22 ist mit der ersten Hohlwelle 5 verbunden und wirkt in ihrer ersten Schaltstellung E mit dem Zahnrad 4 und ihrer zweiten Schaltstellung F mit dem Losrad 8 zusammen. Die dritte Synchronisierkupplung 23 ist mit der Ausgangswelle 9 verbunden und wirkt in ihrer ersten Schaltstellung C mit dem Festrad 13 und in ihrer zweiten Schaltstellung D mit dem Losrad 11 zusammen. Mit diesem beispielhaft dargestellten Schaltgetriebe können sechs Vorwärtsgänge (G1 bis G6) und ein Rückwärtsgang R geschaltet werden. Das entsprechende Schaltschema ist in Fig. 2 dargestellt. Bei diesem beispielhaft dargestellten Getriebe werden alle Gänge (G1 bis G6, R) durch Betätigen von jeweils zwei Synchronisierkupplungen geschaltet. So wird beispielsweise der Rückwärtsgang R durch Schalten der Synchronisierkupplung 23 in ihre Schaltstellung D und durch Schalten der Synchronisierkupplung 22 in ihre Schaltstellung F eingelegt. Der sich dabei einstellende Kraftfluß ergibt sich in anschaulicher Weise aus der Fig. 1. Der zuvor beschriebene Getriebeaufbau ist hier nur exemplarisch dargestellt. Ein anderer Getriebeaufbau ist ohne weiteres möglich. Die im nachfolgenden näher beschriebene Schaltvorrichtung kann auch ohne weiteres für Schaltgetriebe genutzt werden, bei denen je Schaltvorgang nur eine Synchronisierkupplung oder ein ähnliches Schaltelement betätigt wird.

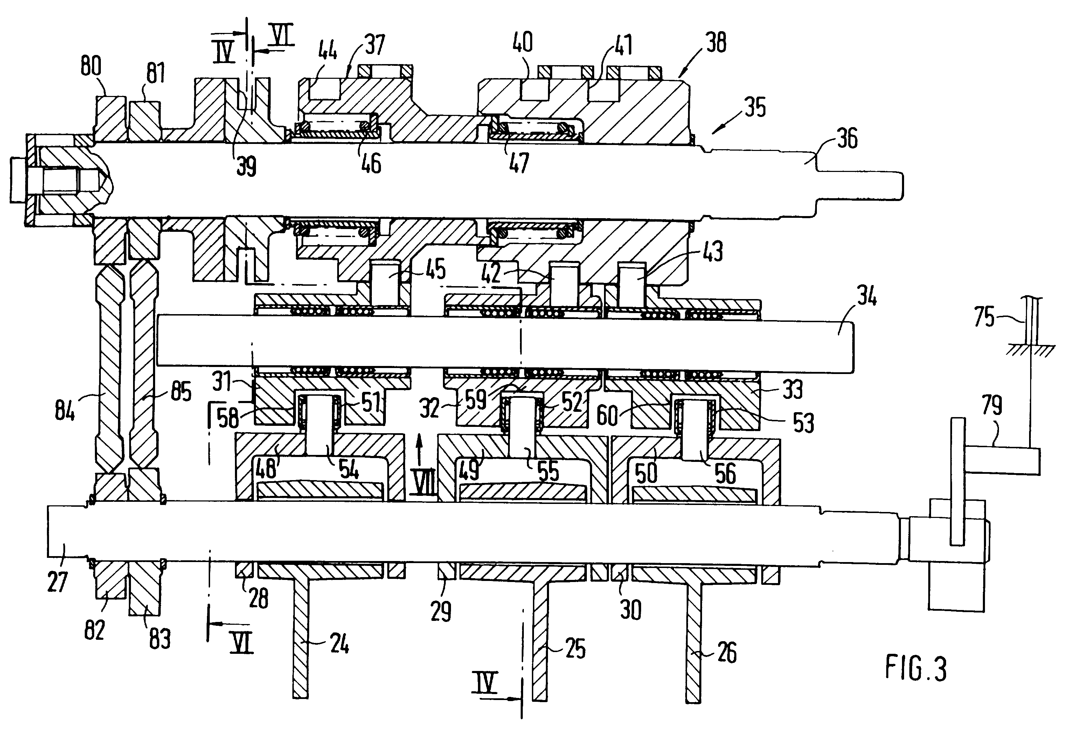

Die Betätigung der Synchronisierkupplungen 21 bis 23 und damit das Schalten des Schaltgetriebes 1 erfolgt auf an sich bekannte Weise. Durch axiales Verschieben von mit den Synchronisierkupplungen zusammenwirkenden Schaltgabeln 24 bis 26. Es ist jedoch auch möglich, anstelle der axial verschieblichen Schaltgabeln ebenfalls bekannte Schwenkgabeln zu verwenden, deren Schwenkbewegung ein Verschieben der Synchronisierkupplungen verursacht. Diese Schaltgabeln 24 bis 26 sind - wie in Fig. 3 dargestellt - längsverschieblich auf einer Vorwählwelle 27 geführt. Das Verschieben der Schaltgabeln 24 bis 26 erfolgt durch bügelförmige Koppelelemente 28 bis 30, die mit jeweils einem Zwischenelement 31 bis 33 verbunden sind. Diese Zwischenelemente 31 bis 33 sind längsverschieblich auf einer Führungsstange 34 geführt und mit einem Schaltrotor 35 gekoppelt. Der Schaltrotor 35 besteht im wesentlichen aus einer Schaltwelle 36 und zwei Rotorelementen 37, 38. Die Schaltwelle 36 ist endseitig im nicht näher dargestellten Getriebegehäuse des Schaltgetriebes 1 gelagert und wird durch ein an sich bekanntes Schrittschaltwerk, von dem in Fig. 3 nur der mit der Schaltwelle 36 verbundene Mitnehmerteil 39 dargestellt ist, schrittweise verdreht. Auf der Schaltwelle 36 ist das erste Rotorelement 38 befestigt. Dieses hat an seinem Außenumfang zwei umlaufende Führungsbahnen 40, 41, in die jeweils ein Schaltfinger 42, 43 eingreift. Der Schaltfinger 42 ist fest mit dem Zwischenelement 32 und der Schaltfinger 43 mit dem Zwischenelement 33 verbunden. Über die Führungsbahn 40 wird somit beim Verdrehen der Schaltwelle 36 die Schaltgabel 25 und damit die Synchronisierkupplung 22 bewegt. Durch die Führungsbahn 41 wird über das Zwischenelement 33 und das Koppelelement 30 die Schaltgabel 26 und damit die Synchronisierkupplung 23 bewegt. Das zweite Rotorelement 37 ist drehfest aber axial verschieblich auf der Schaltwelle 36 gelagert. An seinem Außenumfang ist eine umlaufende Führungsbahn 44 ausgebildet, in die ein am Zwischenelement 31 befestigter Schaltfinger 45 eingreift. Das Zwischenelement 31 wirkt über das Koppelelement 28 mit der Schaltgabel 24 zusammen. Die Führungsbahn 44 des zweiten Rotorelementes 37 wirkt somit auf die Synchronisierkupplung 21. Das zweite Rotorelement ist zwischen zwei Federelementen 46, 47 eingespannt, die ein geringes axiales Verschieben während des Schaltvorganges ermöglichen. Durch diese Einspannung und axiale Verschieblichkeit ist ein sicherer Schaltvorgang beim gleichzeitigen Betätigen zweier Synchronisierkupplungen gewährleistet. Der hier nicht erfindungswesentliche nähere Aufbau des Schaltrotors 36 ist beispielsweise in der deutschen Patentanmeldung 195 05 323 beschrieben. Wird - wie zuvor bereits angeführt - anstelle des exemplarisch beschriebenen Getriebeaufbaus ein anderer verwendet, bei dem beispielsweise zum Schalten der Getriebgänge nur eine Synchronisierkupplung verstellt wird, kann auf die Verwendung zweier getrennter Rotorelemente verzichtet werden. Der Schaltrotor kann dann ohne weiteres mit nur einem einzigen Rotorelement ausgebildet werden.

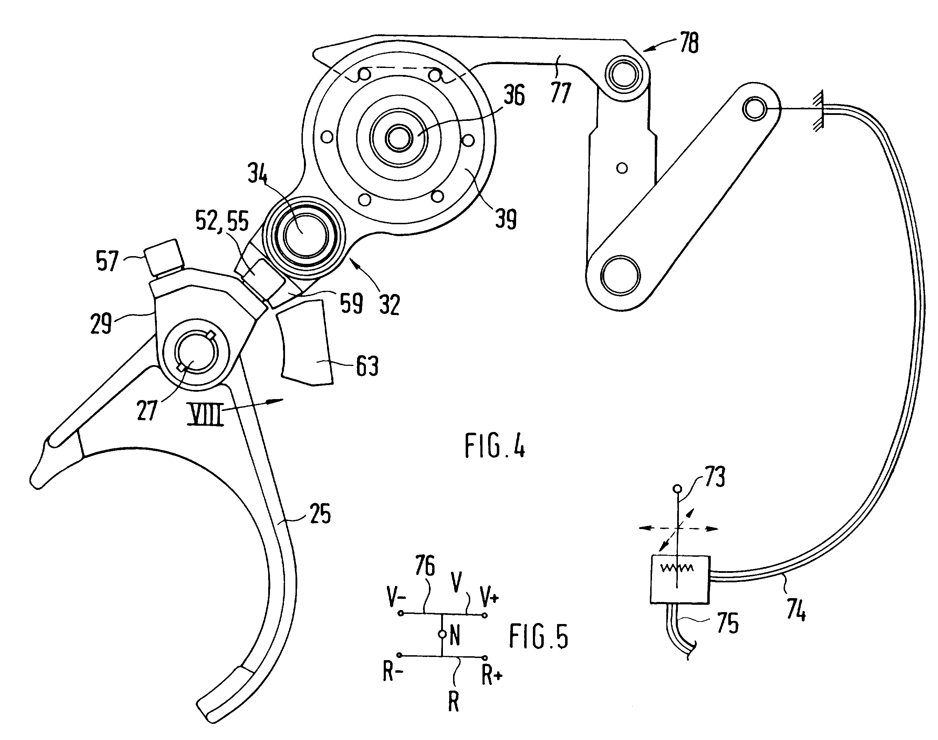

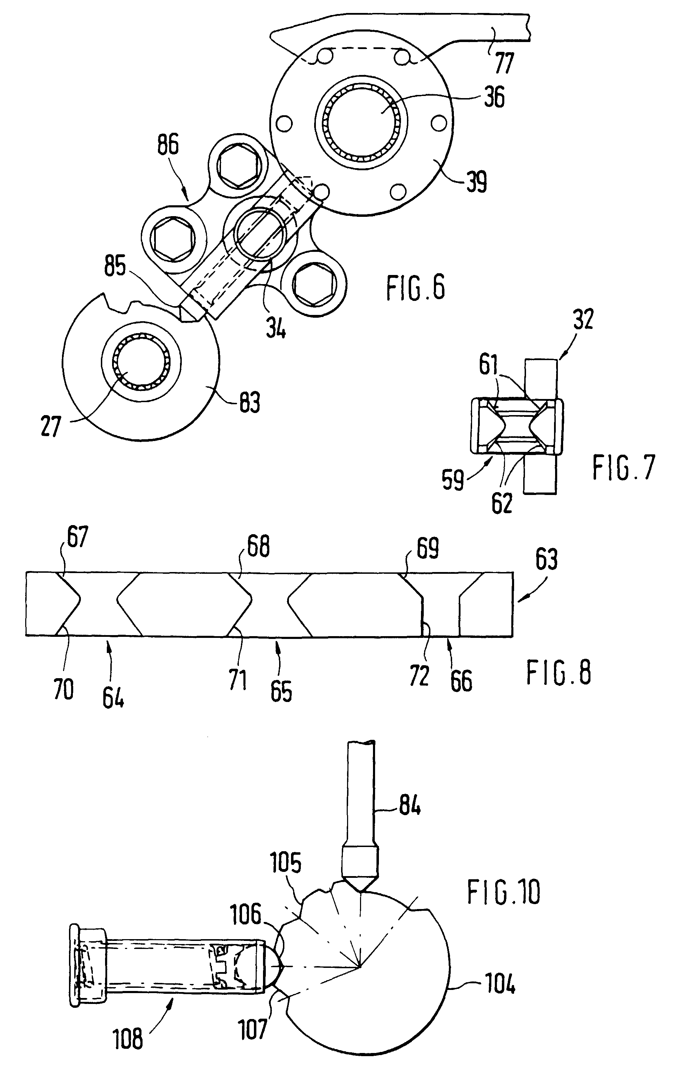

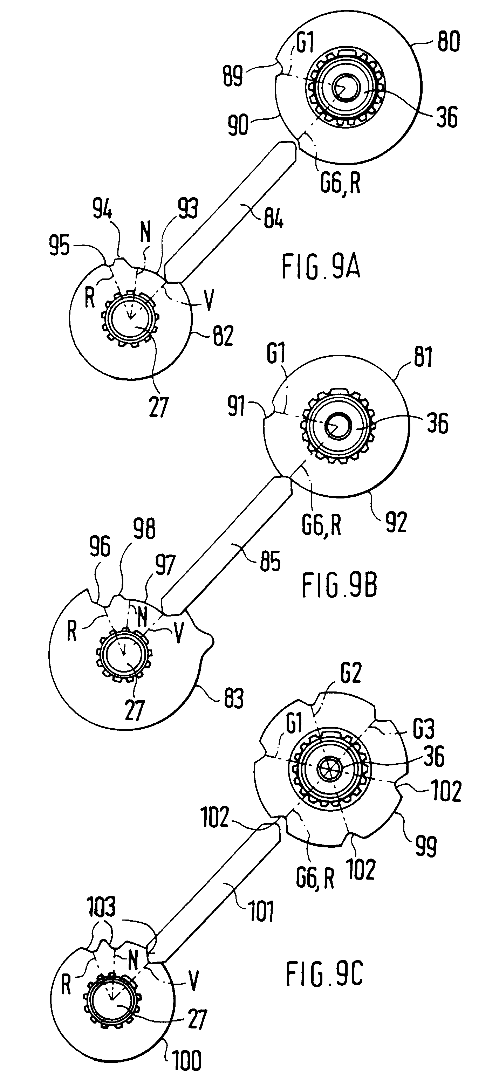

Die bügelförmigen Koppelelemente 28 bis 30 sind drehfest aber axial verschieblich auf der Vorwählwelle 27 geführt. Die Koppelelemente 28 bis 30 und die Vorwählwelle 27 weisen dazu eine in Fig. 4 ersichtliche Keilverbindung auf. Die Koppelelemente 28 bis 30 haben an ihrem Querbügel 48 bis 50 jeweils ein mit einer Rolle 51 bis 53 versehenes Führungsglied 54 bis 56. Die beim Schalten des Rückwärtsganges R wirksamen Koppelelemente 29 und 30, von denen in Fig. 4 zur besseren Übersicht nur das Koppelelement 29 dargestellt ist, sind mit jeweils einem zweiten in Schwenkrichtung versetzten Führungsglied 57 versehen. Die Führungsglieder 54 bis 57 wirken jeweils mit einer Führungsnut 58 bis 60 der Zwischenelemente 31 bis 33 zusammen. Diese Führungsnuten 58 bis 60 haben - wie am Beispiel des Zwischenelementes 32 in Fig. 7 dargestellt - einander gegenüberliegende etwa V-förmige Führungsflächen 61, 62. Bei der in Fig. 4 gewählten Darstellungsrichtung ist unterhalb der Zwischenelemente 31 bis 33 eine kammartig ausgebildete, gehäusefeste Verstelleinheit 63 angeordnet. Diese in Fig. 8 näher dargestellte Verstelleinheit 63 hat drei Führungsbahnen 64 bis 66, die jeweils einem Koppelelement 28 bis 30 bzw. deren Führungsgliedern 54 bis 56 zugeordnet sind. Die Führungsbahnen sind dabei so angeordnet, daß die Führungsglieder 54 bis 56 beim Verdrehen der Vorwählwelle 27 aus den Führungsnuten 58 bis 60 der jeweiligen Zwischenelemente herausgeschwenkt und in jeweils eine der Führungsbahnen 64 bis 66 überführt werden. Die drei Führungsbahnen 64 bis 66 haben jeweils einen V-förmigen Einlaufbereich 67 bis 69, durch die die Führungsglieder der Koppelelemente unabhängig von ihrer vorherigen Ausgangsposition in eine Mittelstellung gedrückt oder in dieser gehalten werden, die der Neutralstellung der jeweils zugeordneten Synchronisierkupplung entspricht. An die Einlaufbereiche 67 und 68 der Führungsbahnen 64 und 65 schließt sich jeweils ein umgekehrt V-förmiger zweiter Führungsbereich 70, 71 an. Der Einlaßbereich 69 der Führungsbahn 66 geht in einen Führungsbereich 72 mit parallelen Wänden über.

Der Schalthebel 73 des Kraftfahrzeuges ist über zwei als Übertragungsmittel dienende Seilzüge 74, 75 mit dem Schaltrotor 35 bzw. der Vorwählwelle 27 verbunden. Bewegungen des Schalthebels innerhalb der ersten Schaltgasse 76, die beispielsweise in Fahrtrichtung des Kraftfahrzeuges verläuft, werden über den ersten Seilzug 74 auf die Schaltklinke 77 des Schrittschaltwerkes 78 übertragen. Die Bewegungen des Schalthebels in der ersten Schaltgasse bzw. parallel dazu werden somit über die Schaltklinke 77 des Schrittschaltwerkes 78 auf das Mitnehmerteil 39 am Schaltrotor 35 übertragen, der somit in eine seiner beiden Drehrichtungen verstellt wird. Bewegungen des Schalthebels 73 senkrecht zur ersten Schaltgasse 76 werden über den zweiten Seilzug 75 auf einen mit der Vorwählwelle 27 gekoppelten Hebel 79 übertragen, so daß durch Bewegungen des Schalthebels 73 senkrecht zur ersten Schaltgasse die Vorwählwelle 27 verdreht wird.

Das Schrittschaltwerk 78 ist in diesem Ausführungsbeispiel so ausgelegt, daß bei jedem Einzelschaltvorgang, d.h. bei jedem Bewegen des Schalthebels in bzw. parallel zur ersten Schaltgasse aus der neutralen Mittelstellung in eine der beiden Endstellungen eine Verdrehung des Schaltrotors um 60° bewirkt ist. Der Schalthebel wird nach jedem Schaltvorgang durch nicht näher dargestellte Federelemente in seine neutrale Mittelstellung bezogen auf die erste Schaltgasse zurückbewegt, aus der durch erneutes Vor- oder Zurückbewegen der nächste Schaltvorgang ausgelöst wird. Die Führungsbahnen in den beiden Rotorelementen sind so angeordnet, daß die sechs Vorwärtsgänge und der Rückwärtsgang in 60°-Schritten des Schaltrotors geschaltet werden. Die Betätigung des Rückwärtsganges R und des sechsten Ganges G6 erfolgen dabei in der gleichen Winkelposition des Schaltrotors, wobei die entsprechenden Führungsbahnen in diesem Winkelbereich parallel liegen. Das Schalten der Vorwärtsgänge G1 bis G6 erfolgt durch Verdrehen des Schaltrotors 35, sofern die Vorwählwelle 27 in ihre erste Endstellung V gedreht ist. Durch Bewegen des Schalthebels 73 aus seiner Mittelstellung in eine Schaltrichtung V+ erfolgt ein Raufschalten der Gänge. Durch Bewegen aus der Mittelstellung in die entgegengesetzte Richtung V- erfolgt ein Runterschalten. Wird durch Querbewegen des Schalthebels 73 senkrecht zur ersten Schaltgasse 76 die Vorwählwelle 27 in ihre Zwischenposition N verdreht, werden die Koppelelemente 28 - 30 so verschwenkt, daß die Führungsglieder 54 - 56 aus den Führungsnuten 58 - 60 in den Zwischenelementen 31 - 33 herausgeschwenkt und in den mittleren Bereich der Verstelleinheit 63 geschwenkt werden. Die Führungsnuten 58 - 60 in den Zwischenelementen 31 - 33 und die Führungsbahnen 64 - 66 in der Verstelleinheit 63 sind einander räumlich so zugeordnet, daß die Führungsglieder aus der jeweils zugeordneten Führungsnut im Zwischenelement in die zugehörige Führungsbahn der Verstelleinheit geschwenkt werden. Dabei sind diese einander jeweils so zugeordnet, daß durch eine Zwangsführung der Führungsglieder in den Führungsbahnen der Verstelleinheit alle Koppelelemente aus ihrer jeweiligen Schaltstellung in die Neutralstellung verschoben werden. Diese Neutralstellung des Getriebes kann aus jedem vorher eingelegten Vorwärtsgang G1 bis G6 durch Querbewegen des Schalthebels eingelegt werden. Wird der Schalthebel aus der Stellung N in die erste Schaltgasse zurückbewegt, werden die Führungslieder aus der Verstelleinheit herausgeschwenkt und in die Führungsnuten der Zwischenelemente zurückgedreht. Wurde der Schaltrotor zwischenzeitlich nicht verdreht, werden die Koppelelemente durch die Führungsbahnen 62 der Zwischenelemente zurück in ihre ursprüngliche Position verstellt, so daß der ursprünglich geschaltete Gang wieder eingelegt wird.

Zum Schalten des Rückwärtsganges R werden durch weiteres Verschwenken des Schalthebels in die Schaltstellung R die Führungsglieder aus dem mittleren Bereich der Verstelleinheit soweit herausgeschwenkt, daß durch die Formgebung der Führungsnuten 70, 71 ein Vor- und Zurückbewegen der dem Rückwärtsgang zugeordneten Koppelelemente möglich ist. Dabei werden die zweiten Führungsglieder 57 an den dem Rückwärtsgang R zugeordneten Koppelelementen so weit verdreht, daß sie sich in Eingriff mit den Führungsnuten der Zwischenelemente befinden. Das weitere Koppelelement verbleibt in seiner Neutralstellung, d. h. das Führungsglied verbleibt innerhalb der parallelen Wandbereich des Führungsbereiches 72. Durch Bewegen des Schalthebels aus dieser Mittelstellung in die Schaltstellung R+ wird die Schaltwelle verdreht, so daß aus dem ersten Gang G1 in den Rückwärtsgang R geschaltet wird. Durch Zurückbewegen des Schalthebels aus der Mittelstellung in die Schaltstellung R- wird der Schaltrotor aus der Schaltstellung R in die Schaltstellung des ersten Ganges G1 zurückbewegt. Zum Einlegen des ersten Ganges G1 ist daran anschließend das Verdrehen der Vorwählwelle 27 in die Schaltstellung V erforderlich, in der alle Führungsglieder wieder im Eingriff mit dem jeweiligen Zwischenelement sind. Die Vorwärtsgänge G1 bis G6 können dann durch Bewegen des Schalthebels in der ersten Schaltgasse - wie zuvor beschrieben - geschaltet werden. Die an ein H-Schaltbild einer herkömmlichen Schaltvorrichtung angelehnten Bewegungen des Schalthebels sind schematisch in Figur 5 dargestellt. In Abwandlung dazu kehrt der Schalthebel jedoch nach jeder Schaltbewegung in der ersten Schaltgasse oder der parallelen Rückwärtsgangschaltgasse in die Mittelstellung zurück.

Auf der Schaltwelle 36 sind in diesem Ausführungsbeispiel zwei Rastscheiben 80, 81 drehfest angeordnet, denen zwei drehfest mit der Vorwählwelle 27 gekoppelte Rastscheiben 82, 83 gegenüberstehen. Zwischen den einander gegenüberliegenden Rastscheiben 80 bis 83 sind zwei Sperrstifte 84, 85 angeordnet, die in einer gehäusefesten Führung 86 längsbeweglich geführt sind. Die Rastscheiben 80 bis 83 und die Sperrstifte 84 und 85 sind einander so zugeordnet, daß die Rastscheibe 80 auf der Schaltwelle 36, der Sperrstift 84 und die Rastscheibe 82 auf der Vorwählwelle 27 zusammenwirken. Die Rastscheibe 81 auf der Schaltwelle 36 wirkt gleichzeitig mit dem Raststift 85 und der Rastscheibe 83 auf der Vorwählwelle 27 zusammen. Die Rastscheiben 80 bis 83 weisen an ihrer Umfangsfläche einander zugeordnete Vertiefungen und Erhöhungen auf, die nachfolgend näher erläutert werden und durch die ein Verdrehen der beiden Wellen relativ zueinander nur bei vorgegebenen Schaltstellungen bzw. Drehstellungen der Wellen möglich ist.

Die Erhöhungen und Vertiefungen auf den Rastscheiben 80 bis 83 sind den jeweiligen Drehstellungen des Schaltrotors bzw. den Schaltstellungen des Schaltgetriebes zugeordnet. Die nachfolgende Beschreibung der einzelnen Rastscheiben ist den entsprechenden Drehstellungen des Schaltrotors bzw. den Schaltstellungen des Getriebes zugeordnet. Die einzelnen Winkel - und Umfangsbereiche - sind dabei jeweils einem Getriebegang zugeordnet. Die Rastscheiben 80 bis 83 sind so auf der Schaltwelle 36 bzw. der Vorwählwelle 27 angeordnet, daß bei entsprechend eingelegtem Getriebegang sich die zugeordneten Positionen der Rastscheiben im Bereich des Sperrstiftes 84 bzw. 85 befinden. Die Rastscheibe 80 hat eine erste Vertiefung 89, die dem ersten Vorwärtsgang G1 zugeordnet ist. Die einzelnen Getriebegänge sind in diesem Ausführungsbeispiel und der gewählten Darstellungsrichtung im Uhrzeigersinn fortlaufend angeordnet. Von der Schaltposition für den sechsten Gang G6 bzw. den Rückwärtsgang R ausgehend, erstreckt sich eine zweite, flachere Vertiefung 90 im Uhrzeigersinn bis zur ersten Vertiefung 89.

Die zweite auf der Schaltwelle angeordnete Rastscheibe 81 hat eine erste Vertiefung 91, die dem ersten Vorwärtsgang G1 zugeordnet ist. An diese schließt sich eine im Uhrzeigersinn fortlaufende Vertiefung 92 mit geringerer Tiefe an, die bis zur Schaltposition G6 bzw. R reicht. Die Rastscheiben 82, 83 auf der Vorwählwelle 27 haben im wesentlichen drei zugeordnete Bereiche. Ein erster Schaltbereich V, entspricht der ersten Schaltgasse am Schalthebel. In diesem Schaltbereich der Vorwählwelle 27 werden durch Verdrehen der Schaltwelle die Vorwärtsgänge G1 bis G6 geschaltet. Daran schließt sich ein zweiter Bereich N an, der der Neutralstellung des Schaltgetriebes entspricht. In dieser Schaltstellung N der Vorwählwelle befinden sich die Führungsglieder in der mittleren Stellung innerhalb der Verstelleinheit bzw. der Führungsnuten. Auf diesen Bereich folgt der Bereich R, der der zweiten Endstellung der Vorwählwelle entspricht und in dem das Schalten des Rückwärtsganges erfolgt.

Die Rastscheibe 82 weist zwischen den Schaltpositionen V und N eine erste Vertiefung 93 auf und davon durch eine Stufe 94 mit vollem Scheibendurchmesser abgetrennt eine weitere Vertiefung 95 geringerer Tiefe auf. Diese ist dem Schaltbereich R zugeordnet.

Die Rastscheibe 83 hat im Bereich der Schaltstellung R eine Vertiefung 96 und zwischen den Schaltbereichen N und V einen vertieften Abschnitt 97 geringerer Tiefe. Zwischen der Vertiefung 96 und dem vertieften Abschnitt 97 ist eine Stufe 98 angeordnet.

Die Raststifte 84 und 85 sind zwischen den beiden einander zugeordneten Rastscheiben 80 und 82 bzw. 81 und 83 längsbeweglich geführt, wobei jeweils mindestes ein Ende des Sperrstiftes am Außenumfang bzw. am Grund der Vertiefungen einer der Rastscheiben entlang geführt wird. Befindet sich die Rastscheibe 82 und damit die Vorwählwelle 27 wie in der Figur 9a dargestellt in der Position V, liegt der Raststift 84 am Grund der Vertiefung 93 an. Die Länge des Raststiftes 84 ist dabei so bemessen, daß die Rastscheibe 80 und damit die Schaltwelle 36 über den gesamten Drehbereich frei beweglich ist. Gleichzeitig ist in jeder Position der Rastscheibe 80 ein Verdrehen der Vorwählwelle 27 und damit der Rastscheibe 82 aus der Position V in die Position N, d.h. die Neutralstellung des Schaltgetriebes möglich. Soll zum Schalten des Rückwärtsganges R die Vorwählwelle in ihre Position R verdreht werden, wird der Raststift 84 durch die Stufe 94 zwischen den Positionen R und N angehoben. Dies ist aufgrund der einander zugeordneten Abmessungen nur möglich, sofern sich die Schaltwelle in der Position G1 befindet, d.h. wenn der Raststift 84 in die Vertiefung 89 eintauchen kann. In allen anderen Positionen der Schaltwelle wird der Raststift 84 durch die Stufe 94 gegen den Umfang bzw. den Grund der Vertiefung 90 gedrückt, ohne daß die Stufe unter dem Raststift durchgeführt werden kann. Ein Weiterdrehen ist somit nicht möglich. Das Einlegen des Rückwärtsganges wird damit erst möglich, wenn die Rotorwelle zuvor in der Position G1 des ersten Vorwärtsganges stand. Damit wird verhindert, daß der Rückwärtsgang versehentlich aus einem der anderen Vorwärtsgänge G2 bis G6 heraus eingelegt werden kann. Ein Zurückschalten aus einem anderen als dem ersten Gang G1 durch eine Querbewegung des Schalthebels, d.h. durch ausschließliches Bewegen der Vorwählwelle, wird ebenfalls verhindert. Um die Vorwählwelle aus der Position R in die Position N bzw. V zu verdrehen, muß zuvor die Rotorwelle durch Zurückschalten (R-) des Schalthebels in die Position des ersten Getriebeganges G1 verdreht werden. Erst dann kann der Raststift 84 über die Stufe 94 der Rastscheibe 82 angehoben und in den Bereich der Vertiefung 93 bewegt werden. Ein mehrmaliges Hochschalten bzw. Weiterdrehen der Rotorwelle durch Bewegen des Schalthebels in der R-Gasse ist durch die Verriegelung nicht möglich.

Durch die Rastscheiben 81 und 83 wird verhindert, daß durch Querbewegen des Schalthebels vom eingelegten Rückwärtsgang ohne Verdrehen der Rotorwelle in eine Neutralposition gelangt werden kann. Um aus dem Rückwärtsgang R in Neutral zu schalten, ist zuvor ein bewußtes Herausnehmen des Rückwärtsganges durch Betätigen (R-) des Schalthebels erforderlich. Bei eingelegtem Rückwärtsgang R befindet sich die Rastscheibe 81 in der in der Figur 9b dargestellten Position. Die Rastscheibe 83 ist dabei entgegen der Figur 9b so verdreht, daß der Raststift 85 in die Vertiefung 96 ragt. Soll aus dieser Position in Neutral N oder den ersten Gang G1 geschaltet werden, wird der Raststift 85 durch die Stufe 98 angehoben. Ein ausreichender Freiraum für den Raststift 85 ist dabei nur gegeben, wenn die Rotorwelle und damit die Rastscheibe 81 zuvor durch entsprechendes Bewegen des Schalthebels in die Position G1 verdreht wird. In allen anderen Positionen der Rotorwelle wird der Raststift 85 durch Stufe 98 gegen den Grund der Vertiefung 92 gedrückt, ohne daß jedoch die Stufe 98 am Raststift 85 vorbeigeführt werden kann. Ein weiteres Verdrehen der Rotorwelle durch mehrmaliges Betätigen des Schalthebels in Richtung R- ist daher nicht möglich.

Durch zwei weitere Rastscheiben 99 und 100, die auf der Rotorwelle bzw. der Vorwählwelle angeordnet werden, sowie durch einen dazwischen längsbeweglich geführten weiteren Sperrstift 101 sind weitere Sicherheitsfunktionen integrierbar. Die Rastscheibe 99 hat dabei jeweils in 60° Abständen eine Vertiefung 102, die den Schaltpositionen G1 bis G6 und R entsprechen. Die Rastscheibe 100 hat drei Vertiefungen 103, die den Schaltpositionen V, N und R entsprechen. Die Abmessungen der Vertiefungen und die Länge des Sperrstiftes sind dabei so aufeinander abgestimmt, daß ein gleichzeitiges Bewegen beider Wellen verhindert wird. Ein Bewegen bzw. Verdrehen der beiden Wellen ist nur möglich, wenn sich der Sperrstift in einer Vertiefung der Rastscheibe 99 bzw. der Rastscheibe 100 befindet. Damit wird sichergestellt, daß der Schalthebel des Kraftfahrzeuges nur in einer Betätigungsrichtung (in Längsrichtung bzw. Querrichtung des Kraftfahrzeuges) bewegt werden kann. Ein Schrägschalten, beispielsweise aus der Mittelstellung der ersten Schaltgasse in die Position R+ wird damit verhindert.

Die Vertiefungen 96 und 97 an der Rastscheibe 83 sind in Bezug auf die Länge des Raststiftes 85 und den Durchmesser der Rastscheibe 92 sowie deren Vertiefungen 91 und 92 so bemessen, daß sie gleichzeitig einen Endanschlag für die Verdrehung der Vorwählwelle 27 bilden. Aus der Schaltstellung R ist daher nur ein Verdrehen in Richtung der Schaltstellungen N und V möglich. Ein Verdrehen der Vorwählwelle aus der Schaltstellung R in die entgegengesetzte Richtung ist nicht möglich. Gleiches gilt in analoger Weise für die gegenüberliegende Endstellung V.

Durch die in Figur 10 mit 104 bezeichnete Abwandlung der Rastscheibe 82 ist eine Verrastung der Vorwählwelle 27 in den Schaltstellungen V, N und R möglich. Die Rastscheibe 104 weist dazu drei weitere Vertiefungen 105 bis 107 auf, die um einen definierten Winkel gegenüber den Vertiefungen 93 und 95 versetzt sind und ebenfalls den zuvor beschriebenen Schaltstellungen zugeordnet sind. In diese Vertiefungen ragt bei entsprechender Drehstellung der Vorwählwelle ein federbelastetes Rastglied 108, durch das die entsprechende Schaltstellung fixiert wird, so daß ein unbeabsichtigtes Verdrehen verhindert wird. Zum willkürlichen Verdrehen der Vorwählwelle müssen die Rastkräfte des federbelasteten Rastgliedes überwunden werden.

Die Anzahl, Zuordnung und Formgebung der Rastscheiben ist hier nur beispielhaft dargestellt. Eine andere Anordnung, Anzahl oder Formgebung ist ohne weiteres möglich. Dabei können insbesondere einzelne Funktionen ergänzt werden oder entfallen, sofern andere Sicherheitsfunktionen oder Schaltfunktionen erforderlich werden.

## Patentansprüche

1. Schaltvorrichtung für ein Schaltgetriebe mit mehreren Vorwärtsgängen (G1 - G6) und mindestens einem Rückwärtsgang (R), dessen Schaltelemente (21 - 23, 24 - 26) über Koppelelemente (28 - 30, 31 - 33) von einem Schaltrotor (35) verstellbar sind, der wiederum durch erste Übertragungsmittel (74) beim Betätigen eines in mindestens einer ersten Schaltgasse (76) geführten Schalthebels (73) verdreht wird, dadurch gekennzeichnet, daß zumindest der Rückwärtsgang (R) durch Bewegen des Schalthebels (73) in einer zweiten Schaltgasse geschaltet ist, und daß der Schalthebel über zweite Übertragungsmittel (75) mit einer Vorwähleinrichtung (27) gekoppelt ist, mit der Bewegungen des Schalthebels (73) senkrecht zur ersten Schaltgasse (76) auf die Koppelelemente (28 - 30) übertragbar sind.

2. Schaltvorrichtung nach Anspruch 1, dadurch gekennzeichnet, daß die Koppelelemente (28 - 30) auf einer Vorwählwelle (27) geführt sind und durch die zweiten Übertragungsmittel (75) etwa senkrecht dazu verstellbar sind.

3. Schaltvorrichtung nach Anspruch 2, dadurch gekennzeichnet, daß die Koppelelemente (28 - 30) auf der Vorwählwelle (27) in Schaltrichtung axial beweglich geführt sind, daß die zweiten Übertragungsmittel (75) mit der Vorwählwelle (27) gekoppelt sind, und durch Verdrehen der Vorwählwelle die Koppelelemente etwa senkrecht zur Schaltrichtung verschwenkbar sind.

4. Schaltvorrichtung nach Anspruch 3, dadurch gekennzeichnet, daß die Koppelelemente (28 - 30) beim Verschwenken mit einer Verstelleinheit (63) zusammenwirken, durch die ein Verschieben der Koppelelemente in Schaltrichtung möglich ist.

5. Schaltvorrichtung nach Anspruch 4, dadurch gekennzeichnet, daß die Koppelelemente (28 - 30) jeweils mindestens ein Führungsglied (54 - 56) aufweisen, mit dem die Schaltbewegung auf das Koppelelement übertragen wird, und daß dieses Führungsglied beim Verschwenken in Eingriff mit der Verstelleinheit (63) kommt.

6. Schaltvorrichtung nach Anspruch 5, dadurch gekennzeichnet, daß an der Verstelleinheit (63) Führungsbahnen (64 - 66) ausgebildet sind, durch die das jeweilige Koppelelement (28 - 30) beim Einschwenken in eine Neutralstellung bewegt wird.

7. Schaltvorrichtung nach Anspruch 1, dadurch gekennzeichnet, daß die Koppelelemente (28 - 30) in eine zweite Schwenkstellung (R, V) verstellbar sind, in der Schaltvorgänge auslösbar sind.

8. Schaltvorrichtung nach Anspruch 1, dadurch gekennzeichnet, daß zumindest das für die Schaltung des Rückwärtsganges (R) genutzte Koppelelement mit zwei beabstandeten Führungsgliedern (55, 57) versehen ist, von denen das erste bei der Schaltung der Vorwärtsgänge (G1 - G6) mit dem Schaltrotor (35) verbunden ist.

9. Schaltvorrichtung nach Anspruch 1, dadurch gekennzeichnet, daß in der zweiten Schwenkstellung durch Bewegen (R+, R-) des Schalthebels (73) parallel zur ersten Schaltgasse (76) der Rückwärtsgang (R) eingelegt oder herausgenommen wird.

10. Schaltvorrichtung nach Anspruch 1, dadurch gekennzeichnet, daß Verriegelungsmittel (80 - 85) vorgesehen sind, durch die ein Schalten des Rückwärtsgang (R) nur aus definierten Schaltstellungen des Schaltgetriebes möglich ist.

11. Schaltvorrichtung nach Anspruch 10, dadurch gekennzeichnet, daß die Verriegelungsmittel (80 - 85) aus zusammenwirkenden Sperrgliedern zwischen der Vorwählwelle (27) und dem Schaltrotor (35) bestehen.

12. Schaltvorrichtung nach Anspruch 11, dadurch gekennzeichnet, daß die Sperrglieder aus jeweils mindestens einer Rastscheibe (80 - 83, 99, 100, 104) an der Vorwählwelle (27) und dem Schaltrotor (35) und einem zwischen diesen wirkenden Rastglied (84, 85, 101) besteht.

13. Schaltvorrichtung nach Anspruch 12, dadurch gekennzeichnet, daß die Rastscheiben (80 - 83, 99, 100, 104) jeweils drehfest mit dem Schaltrotor und der Vorwählwelle verbunden sind und einander zugeordnete Rastkonturen mit Vertiefungen und/oder Erhöhungen aufweisen, und daß das zugeordnete Rastglied (84, 85, 101) längsbeweglich zwischen den Rastscheiben geführt ist.

## Claims

1. A gear-shift device for a gearbox with a plurality of forward gears (**G1** to **G6**) and at least one reverse gear (**R**), the gear-shift members (21 to 23, 24 to 26) of which are displaceable by a gear-shift rotor (35) by way of coupling members (28 to 30, 31 to 33), the said gear-shift rotor (35) being rotated in turn by first transmission means (74) when a gear-shift lever (73) guided in at least one first gear-shift gate (76) is actuated, **characterized in that** at least the reverse gear (**R**) is shifted by moving the gear-shift lever (73) in a second gear-shift gate, and the gear-shift lever is coupled by way of second transmission means (75) to a pre-selection device (27) by which movements of the gear-shift lever (73) can be transmitted to the coupling members (28 to 30) at right angles to the first gear-shift gate (76).

2. A gear-shift device according to Claim 1, **characterized in that** the coupling members (28 to 30) are guided on a pre-selection shaft (27) and are displaceable by the second transmission means (75) substantially at right angles thereto.

3. A gear-shift device according to Claim 2, **characterized in that** the coupling members (28 to 30) are guided on the pre-selection shaft (27) so as to be axially movable in the shifting direction, the second transmission means (75) are coupled to the pre-selection shaft (27), and the coupling members are pivotable substantially at right angles to the shifting direction by rotation of the pre-selection shaft.

4. A gear-shift device according to Claim 3, **characterized in that** the coupling members (28 to 30) cooperate when pivoted with a displacement unit (63) by which the coupling members can be displaced in the shifting direction.

5. A gear-shift device according to Claim 4, **characterized in that** the coupling members (28 to 30) are each provided with at least one guide member (54 to 56) by which the gear-shifting movement is transmitted to the coupling member, and the said guide member engages with the displacement unit (63) when pivoted.

6. A gear-shift device according to Claim 5, **characterized in that** guide paths (64 to 66), by which the respective coupling member (28 to 30) is moved into a neutral position when pivoted in, are formed on the displacement unit (63).

7. A gear-shift device according to Claim 1, **characterized in that** the coupling members (28 to 30) are displaceable into a second pivoting position (**R**, **V**) in which gear-shifting can be initiated.

8. A gear-shift device according to Claim 1, **characterized in that** at least the coupling member used for shifting the reverse gear (**R**) is provided with two spaced guide members (55, 57), the first of which is connected to the gear-shifting rotor (35) during the shifting of the forward gears (**G1** to **G6**).

9. A gear-shift device according to Claim 1, **characterized in that** the reverse gear (**R**) is engaged or disengaged in the second pivoting position by moving (**R+**, **R-**) the gear-shift lever (73) parallel to the first gear-shift gate (76).

10. A gear-shift device according to Claim 1, **characterized in that** locking means (80 to 85) are provided by which the reverse gear (**R**) can be shifted only from defined shifting positions of the gearbox.

11. A gear-shift device according to Claim 10, **characterized in that** the locking means (80 to 85) comprise cooperating interlocking members between the pre-selection shaft (27) and the gear-shift rotor (35).

12. A gear-shift device according to Claim 11, **characterized in that** the interlocking members each [comprise] at least one catching disc (80 to 83, 99, 100, 104) on the pre-selection shaft (27) and the gear-shift rotor (35) and a catching member (84, 85, 101) acting between them.

13. A gear-shift device according to Claim 12, **characterized in that** the catching discs (80 to 83, 99, 100, 104) are each connected in a rotationally fixed manner to the gear-shift rotor and the pre-selection shaft and are provided with mutually associated castching contours with depressions and/raised portions, and the associated catching member (84, 85, 101) is guided longitudinally movably between the catching discs.

## Revendications

1. Dispositif de changement de vitesse pour une boîte de vitesses comportant plusieurs vitesses de marche avant (**G1** à G6) et au moins une vitesse de marche arrière (R), dont les éléments de sélection (21 à 23, 24 à 26) sont déplaçables par l'intermédiaire d'éléments de couplage (28 à 30), (31 à 33) par un rotor de sélection (35), qui est tourné à son tour par des premiers moyens de transmission (74) lors de l'actionnement d'un levier de changement de vitesse (73) guidé dans au moins une première voie de sélection (76), caractérisé en ce qu'au moins la marche arrière (R) est sélectionnée par déplacement du levier de changement de vitesse (73) dans une deuxième voie de communication, et en ce que le levier de changement de vitesse est accouplé, par des deuxièmes moyens de transmission (75), à un dispositif de présélection (27), au moyen duquel des déplacements du levier de changement de vitesse (73) perpendiculairement à la première voie de sélection (76) sont transmissibles aux éléments de couplage (28 à 30).

2. Dispositif de changement de vitesse selon la revendication 1, caractérisé en ce que les éléments de couplage (28 à 30) sont guidés sur un arbre de présélection (27) et sont déplaçables à peu près perpendiculairement à celui-ci par les deuxièmes moyens de transmission (75).

3. Dispositif de changement de vitesse selon la revendication 2, caractérisé en ce que les éléments de couplage (28 à 30) sont guidés de manière à être axialement mobiles dans le sens de sélection, sur l'arbre de présélection (27), en ce que les deuxièmes moyens de transmission (75) sont accouplés à l'arbre de présélection (27) et en ce que, par rotation de l'arbre de présélection, les éléments de couplage peuvent pivoter à peu près perpendiculairement à la direction de sélection.

4. Dispositif de changement de vitesse selon la revendication 3, caractérisé en ce que les éléments de couplage (28 à 30) coopèrent, lors du pivotement, avec une unité de réglage (63) permettant un coulissement des éléments de couplage dans la direction de sélection.

5. Dispositif de changement de vitesse selon la revendication 4, caractérisé en ce que les éléments de couplage (28 à 30) présentent chacun au moins un organe de guidage (54 à 56), par lequel le mouvement de sélection est transmis à l'élément de couplage et en ce que cet organe de guidage vient en prise avec l'unité de réglage (63) lors du pivotement.

6. Dispositif de changement de vitesse selon la revendication 5, caractérisé en ce que sur l'unité de réglage (63) sont formées des voies de guidage (64 à 66), par lesquelles chaque élément de couplage (28 à 30) est déplacé dans une position neutre, lors du pivotement.

7. Dispositif de changement de vitesse selon la revendication 1, caractérisé en ce que les éléments de couplage (28 à 30) sont déplaçables dans une deuxième position de pivotement (R, V) dans laquelle des opérations de changement de vitesse peuvent être déclenchées.

8. Dispositif de changement de vitesse selon la revendication 1, caractérisé en ce qu'au moins l'élément de couplage utilisé pour la sélection de la marche arrière (R), est pourvu de deux organes de guidage (55, 57) espacés, dont le premier est relié au rotor de sélection (35), lors de la sélection des vitesses de marche avant (G1 à G6).

9. Dispositif de changement de vitesse selon la revendication 1, caractérisé en ce que dans la deuxième position de pivotement, la marche arrière (R) est enclenchée ou désengagée par déplacement (R+, R-) du levier de changement de vitesse (73), parallèlement à la première voie de sélection (76).

10. Dispositif de changement de vitesse selon la revendication 1, caractérisé en ce que sont prévus des moyens de verrouillage (80 à 85) permettant une sélection de la marche arrière (R) uniquement à partir de positions de sélection définies de la boîte de vitesses.

11. Dispositif de changement de vitesse selon la revendication 10, caractérisé en ce que les moyens de verrouillage (80 à 85) sont constitués d'organes de blocage coopérants, entre l'arbre de présélection (27) et le rotor de sélection (35).

12. Dispositif de changement de vitesse selon la revendication 11, caractérisé en ce que les organes de blocage sont constitués chacun d'au moins un disque d'encliquetage (80 à 83, 99, 100, 104) sur l'arbre de présélection (27) et sur le rotor de sélection (35), ainsi que d'un organe d'encliquetage (84, 85, 101) agissant entre ceux-ci.

13. Dispositif de changement de vitesse selon la revendication 12, caractérisé en ce que les disques d'encliquetage (80 à 83, 99, 100, 104) sont reliés chacun solidairement en rotation avec le rotor de sélection et l'arbre de présélection et présentent des contours d'encliquetage affectés les uns aux autres avec des creux et/ou des reliefs, et en ce que l'organe d'encliquetage (84, 85, 101) correspondant est guidé mobile longitudinalement entre les disques d'encliquetage.
